# EUROPÄISCHE PATENTSCHRIFT

(11) **EP 2 245 098 B1**
(45) Veröffentlichungstag und Bekanntmachung des Hinweises auf die Patenterteilung: **26.06.2013**
(21) Anmeldenummer: 09712944.9
(22) Anmeldetag: 19.01.2009
(51) Int. Cl.: C09D 5/00, F04D 17/00

(54) **VENTILATOR- ODER GEBLÄSERAD MIT ANTIBAKTERIELLER BESCHICHTUNG**
VENTILATOR WHEEL OR FAN WHEEL WITH ANTIBACTERIAL COATING
ROUE DE VENTILATEUR OU DE SOUFFLANTE AYANT UN REVÊTEMENT ANTIBACTÉRIEN

(30) Priorität: 19.02.2008 DE 202008002350 U
(43) Veröffentlichungstag der Anmeldung: 03.11.2010
(73) Patentinhaber: EBM-Papst Mulfingen GmbH&CO. KG, 74673 Mulfingen (DE)
(72) Erfinder: STRENG, Gunter, 74575 Schrozberg (DE)
(74) Vertreter: Patentanwälte Dr. Solf & Zapf
(86) Internationale Anmeldenummer: PCT/EP2009/050538
(87) Internationale Veröffentlichungsnummer: WO 2009/103578

(56) Entgegenhaltungen:
- WO-A-2005/044446

## Beschreibung

Die vorliegende Erfindung betrifft ein Ventilator- oder Gebläserad bestehend aus einer Nabe und darin befestigten Schaufeln, und einen Ventilator oder ein Gebläse, bestehend aus einem Gehäuse, vorzugsweise mit einem Schutzgitter, und einem in diesem Gehäuse gelagerten Ventilator- oder Gebläserad, mit einem dieses Ventilator- oder Gebläserad antreibenden Elektromotor sowie mit einer Motorhalterung. Derartige Vorrichtungen sind bekannt und in der industriellen Praxis weit verbreitet.

Filtermaterial und Leitungsoberflächen von Klima- und Kühl- oder Lüftungsanlagen verunreinigen mit der Zeit dadurch, dass sich auf ihnen Schmutz- und Fettschichten ablagern. In diesen Schichten sind Bakterien und Pilze enthalten, die über den Luftstrom weiter verbreitet werden können. Hierdurch kann es zu Allergien und Infektionen bei Menschen kommen, die sich in dem jeweiligen klimatisierten oder belüfteten Raum aufhalten. Um dies zu vermeiden oder diese Gefahr zu verringern, ist es bekannt, die jeweiligen Oberflächen der luftführenden Anlagenteile antibakteriell oder antimikrobiell zu beschichten.

So ist in der WO 2005/044446 A1 eine photokatalytisch wirkende, thixotrope Beschichtungszusammensetzung beschrieben, die ein anorganisches Bindemittel, ein nanoskaliges photokatalytisch wirkendes Pulver, ein antibakterielles Pulver und eine verdampfbare Trägerflüssigkeit umfasst. Bei dem antibakteriellen Pulver handelt es sich um eine spezielle Mischung aus einem Alkali- bzw. Erdalkaliphosphat und aus in metallischer oder oxidierter Form vorhandenen Edelmetallen. Diese bekannte Beschichtungzusammensetzung kann in Heizungs-, Lüftungs-, Klima- und Kälteanlagen zur Anwendung kommen.

Metallisches Silber wird im Handel seit langer Zeit in kolloidaler Form als bekanntermaßen antibakteriell wirksame Substanz angeboten. Hierbei handelt es sich in der Regel um in Lösung befindliche feine Silberpartikel. Diese Lösungen besitzen jedoch einerseits schwache Ausgangswirksamkeiten, weil Silber in der konzentrierten Form nicht hoch dosiert werden darf, und weisen andererseits nur sehr kurze Wirksamkeitszeiträume auf. Auch sind mit Silberionen ausgestattete keramische Träger in Pulverform bekannt, in denen Metallionen reversibel an der Materialoberfläche gebunden werden. Im Hinblick auf Silberoxid ist festzustellen, dass dieses keine optimale Eignung für den angegebenen Einsatzzweck besitzt, da es sich an der Luft zu Silbercarbonat umsetzt, welches wiederum hautreizend wirken kann.

Der vorliegenden Erfindung liegt die Aufgabe zu Grunde, den Übertragungsweg von Bakterien, Pilzen, Viren, d. h. Keimen in der Lüftungstechnik noch sicherer gegen die Übertragung dieser Keime zu machen.

Erfindungsgemäß wird dies durch ein Ventilator- oder Gebläserad nach dem Anspruch 1 bzw. durch einen Ventilator oder ein Gebläse nach dem Anspruch 6 erreicht.

Demgemäß ist vorgesehen, dass bei in Lüftungsgeräten vorhandenen Ventilator - oder Gebläserädern die Nabe und/oder die Schaufeln an ihrer Oberfläche zumindest teilweise mit einem antibakteriell wirkenden Wirkstoff ausgestattet sind. Der erfindungsgemäß vorgesehene antibakteriell wirkende Wirkstoff enthält dabei nanoskalige Moleküle von Metall-Komplexen, bei denen es sich um solche von Silber, Kupfer oder Molybdän handelt, oder er besteht aus einem keramischen Träger mit in diesem eingebundenen Silberionen.

Unter "antibakteriell" wird dabei im Sinne der Erfindung sowohl eine Wirksamkeit gegen Bakterien, als auch gegen Viren und Pilze verstanden.

Weiterhin ist es erfindungsgemäß von Vorteil, wenn Ventilatoren oder Gebläse, die aus einem Gehäuse, vorzugsweise mit einem Schutzgitter, und einem in dem Gehäuse gelagerten Ventilator- oder Gebläserad sowie aus einem dieses antreibenden Elektromotor sowie aus einer Motorhalterung bestehen, mindestens an ihren luftführenden Gehäuseabschnitten an ihrer Oberfläche einen antibakteriell wirkenden Wirkstoff aufweisen. Auch hier werden bevorzugt als antibakteriell wirkender Wirkstoff nanoskalige Moleküle von Metall-Komplexen, insbesondere von Edelmetall, verwendet, wie von Silber, Kupfer, Molybdän oder dergleichen. Diese Moleküle weisen eine oligodynamische, antimikrobielle Wirksamkeit auf. Durch die Beschichtung mit derartigen nanoskaligen Molekülen wird der Befall der entsprechend beschichteten Oberfläche durch bakterielle, virale Mikroorganismen und Pilze verhindert. Sie verhindern die Bildung eines Biofilms und führen durch ihre bakterizide Wirksamkeit zur Vernichtung von Mikroorganismen an den beschichteten Oberflächen.

Bei dem erfindungsgemäß alternativ einsetzbaren Wirkstoff, welcher ein keramischer Träger mit in diesen eingebundenen Silberionen ist, kann als keramischer Träger insbesondere ein Aluminium-Silikat zum Einsatz kommen. Ein derartiger Wirkstoff wird pulverförmig in die Beschichtung eingebracht.

Erfindungsgemäß können die antibakteriell wirkenden Wirkstoffe in Lacke, Pulverbeschichtungen oder Kunststoffgemische eingebracht werden, so dass sie entweder als Beschichtung der Oberfläche oder in Form eines Lackauftrags oder einer Oberflächenfolie aufgebracht werden können, indem sie diesen jeweiligen Materialien in unterschiedlicher Konzentration je nach den Anforderungen zugegeben werden. Ebenfalls ist es möglich, die antibakteriell wirkenden Wirkstoffe dem Herstellungsmaterial des Ventilator- oder Gebläserades oder Teilen des Ventilator- oder Gebläsegehäuses beizumischen.

Insofern stellen Ventilator- oder Gebläseräder mit den Merkmalen der Ansprüche 2 bis 5 bevorzugte vorteilhafte Ausführungsformen der Erfindung dar.

Ventilatoren oder Gebläse bestehen üblicherweise aus einem Gehäuse, in dem das Ventilator- oder Gebläserad drehbar gelagert ist, wobei das Ventilatorrad mit dem in ihm integrierten Elektromotor an einer Motorhalterung befestigt ist. Zudem kann das Gehäuse mit einem Schutzgitter versehen sein. Es liegt im Rahmen der Erfindung, wenn die Teile des Ventilators, insbesondere diejenigen, die luftführend sind bzw. im zu fördernden Luftstrom sich befinden, antibakteriell mit einem Wirkstoff gemäß der Erfindung an ihrer Oberfläche ausgestattet sind. Hierbei kann die Konzentration der Wirkstoffbeschichtung an den einzelnen Teilen gleich oder unterschiedlich sein, je nachdem wo die höchste bakterielle Belastung zu erwarten ist. Die Bauform des jeweiligen Ventilators ist für die Ausführung der Erfindung nicht wesentlich, so dass sie bei jeder Art von Ventilator verwendet werden kann, insbesondere sind Axial - und Radialventilatoren üblich.

Bevorzugte vorteilhafte Ausführungsformen der Erfindung sind demnach auch Ventilatoren oder Gebläse mit den Merkmalen der Ansprüche 7 bis 10.

## Patentansprüche

1. Ventilator- oder Gebläserad, bestehend aus einer Nabe und darin befestigten Schaufeln,
**dadurch gekennzeichnet, dass** die Nabe und/oder die Schaufeln an ihrer Oberfläche zumindest teilweise mit einem antibakteriell wirkenden Wirkstoff ausgestattet sind, der nanoskalige Moleküle von Metall-Komplexen enthält, wobei es sich bei den Metall-Komplexen um solche von Silber, Kupfer oder Molybdän handelt, oder der aus einem keramischen Träger mit in diesem eingebundenen Silberionen besteht.

2. Ventilator- oder Gebläserad nach Anspruch 1,
**dadurch gekennzeichnet, dass** der keramische Träger aus Aluminium-Silikat besteht.

3. Ventilator- oder Gebläserad nach Anspruch 1 oder 2,
**dadurch gekennzeichnet, dass** sichderantibakterielle Wirkstoff an der Oberfläche der Nabe und/oder der Schaufeln ausbildet.

4. Ventilator- oder Gebläserad nach Anspruch 3,
**dadurch gekennzeichnet, dass** sich der antibakterielle Wirkstoff an der Oberfläche der Nabe und/oder der Schaufeln in einer Oberflächenbeschichtung befindet, die aus einer Spritzschicht, einem Lackauftrag oder einer Folie besteht.

5. Ventilator- oder Gebläserad nach Anspruch 1 oder 2,
**dadurch gekennzeichnet, dass** der Wirkstoff dem Herstellungswerkstoff des Ventilator- oder Gebläserades beigemischt ist.

6. Ventilator oder Gebläse, bestehend aus einem Gehäuse, vorzugsweise mit einem Schutzgitter, und einem in diesem Gehäuse gelagerten Ventilator- oder Gebläserad sowie einem dieses antreibenden Elektromotor sowie einer Motorhalterung,
**gekennzeichnet durch** ein Ventilator- oder Gebläserad nach einem der Ansprüche 1 bis 5.

7. Ventilator oder Gebläse nach Anspruch 6,
**dadurch gekennzeichnet, dass** das Gehäuse und vorzugsweise die Halterung und das Schutzgitter zumindest an ihren luftführenden Abschnitten an ihrer Oberfläche einen antibakteriellen Wirkstoff aufweisen.

8. Ventilator oder Gebläse nach Anspruch 7,
**gekennzeichnet durch** einen antibakteriellen Wirkstoff des Gehäuses und vorzugsweise der Halterung und des Schutzgitters, der nanoskalige Moleküle von Metall-Komplexen enthält, wobei es sich bei den Metall-Komplexen um solche von Silber, Kupfer oder Molybdän handelt, oder der aus einem keramischen Träger mit in diesem eingebundenen Silberionen besteht.

9. Ventilator oder Gebläse nach einem der Ansprüche 7 oder 8,
**dadurch gekennzeichnet, dass** der antibakterielle Wirkstoff in einer Oberflächenbeschichtung, insbesondere einem Lackauftrag, einer Spritzschicht oder einer Folie enthalten ist.

10. Ventilator oder Gebläse nach einem der Ansprüche 7 oder 8,
**dadurch gekennzeichnet, dass** der antibakterielle Wirkstoff dem Herstellungsmaterial des Ventilators beigemischt ist.

## Claims

1. A ventilator wheel or fan wheel, consisting of a hub and blades fastened therein, **characterised in that** the hub and/or the blades are provided on their surface at least partially with an antibacterially effective active ingredient which contains nanoscale molecules of metal complexes, the metal complexes being those of silver, copper or molybdenum, or which consists of a ceramic carrier with silver ions incorporated therein.

2. A ventilator wheel or fan wheel according to Claim 1, **characterised in that** the ceramic carrier consists of aluminium silicate.

3. A ventilator wheel or fan wheel according to Claim 1 or 2, **characterised in that** the antibacterial active ingredient is formed on the surface of the hub and/or the blades.

4. A ventilator wheel or fan wheel according to Claim 3, **characterised in that** the antibacterial active ingredient is present on the surface of the hub and/or the blades in a surface coating which consists of a spray coat, a paint coat or a film.

5. A ventilator wheel or fan wheel according to Claim 1 or 2, **characterised in that** the active ingredient is mixed into the manufacturing material of the ventilator wheel or fan wheel.

6. A ventilator or fan, consisting of a housing, preferably with a safety grid, and of a ventilator wheel or fan wheel mounted in this housing, and of an electric motor driving this, and of a motor mounting, **characterised by** a ventilator wheel or fan wheel according to one of Claims 1 to 5.

7. A ventilator or fan according to Claim 6, **characterised in that** the housing and preferably the mounting and the safety grid have an antibacterial active ingredient on their surface at least on their air-conveying sections.

8. A ventilator or fan according to Claim 7, **characterised by** an antibacterial active ingredient of the housing and preferably of the mounting and the safety grid, which contains nanoscale molecules of metal complexes, the metal complexes being those of silver, copper or molybdenum, or which consists of a ceramic carrier with silver ions incorporated therein.

9. A ventilator or fan according to one of Claims 7 or 8, **characterised in that** the antibacterial active ingredient is contained in a surface coating, in particular a paint coat, a spray coat or a film.

10. A ventilator or fan according to one of Claims 7 or 8, **characterised in that** the antibacterial active ingredient is mixed into the manufacturing material of the ventilator.

## Revendications

1. Roue de ventilateur ou de soufflante, constituée d'un moyeu et d'aubes fixées dans ce dernier,
**caractérisée en ce que** le moyeu et/ou les aubes sont dotés au niveau de leur surface au moins en partie d'un principe actif ayant une action antibactérienne, lequel contient des molécules nanométriques de complexes métalliques, dans lequel les complexes métalliques sont des complexes métalliques tels que l'argent, le cuivre ou le molybdène, ou lequel principe actif est constitué d'un support en céramique présentant des ions d'argent intégrés dans ce dernier.

2. Roue de ventilateur ou de soufflante selon la revendication 1,
**caractérisée en ce que** le support en céramique est constitué de silicate d'aluminium.

3. Roue de ventilateur ou de soufflante selon la revendication 1 ou 2,
**caractérisée en ce que** le principe actif antibactérien se forme au niveau de la surface du moyeu et/ou des aubes.

4. Roue de ventilateur ou de soufflante selon la revendication 3,
**caractérisée en ce que** le principe actif antibactérien se trouve à la surface du moyeu et/ou des pales dans un revêtement de surface, qui est constitué d'une couche de projection, d'une couche de peinture appliquée ou d'un film.

5. Roue de ventilateur ou de soufflante selon la revendication 1 ou 2,
**caractérisée en ce que** le principe actif est mélangé au matériau de fabrication de la roue de ventilateur ou de soufflante.

6. Ventilateur ou soufflante, constitué(e) d'un boîtier, de préférence comprenant une grille de protection, ainsi que d'une roue de ventilateur ou de soufflante logée dans ledit boîtier ainsi que d'un moteur électrique entraînant ladite roue ainsi que d'un support de moteur,
caractérisé(e) par une roue de ventilateur ou de soufflante selon l'une quelconque des revendications 1 à 5.

7. Ventilateur ou soufflante selon la revendication 6,
caractérisé(e) en ce que le boîtier et de préférence le support et la grille de protection présentent au moins au niveau de leurs segments à guidage d'air, au niveau de leur surface, un principe actif antibactérien.

8. Ventilateur ou soufflante selon la revendication 7,
caractérisé(e) par un principe actif antibactérien du boîtier et de préférence du support et de la grille de protection, lequel principe actif contient des molécules nanométriques de complexes métalliques, dans lequel les complexes métalliques sont des complexes métalliques d'argent, de cuivre ou de molybdène, ou lequel principe actif est constitué d'un support en céramique comprenant des ions d'argent intégrés dans ce dernier.

9. Ventilateur ou soufflante selon l'une quelconque des revendications 7 ou 8,
caractérisé(e) en ce que le principe actif antibactérien est contenu dans un revêtement de surface, en particulier dans une couche de peinture appliquée, dans une couche de proj ection ou dans un film.

10. Ventilateur ou soufflante selon l'une quelconque des revendications 7 ou 8,
caractérisé(e) en ce que le principe antibactérien est mélangé au matériau de fabrication du ventilateur.
